# EUROPÄISCHE PATENTSCHRIFT

(11) **EP 1 207 313 B1**
(45) Veröffentlichungstag und Bekanntmachung des Hinweises auf die Patenterteilung: **14.06.2006**
(21) Anmeldenummer: 01123917.5
(22) Anmeldetag: 06.10.2001
(51) Int. Cl.: F16B 39/26, B21K 1/70, B60B 3/16

(54) **Mutter und Verfahren zu ihrer Herstellung**
Nut and method of manufacturing the same
Ecrou et son procédé de fabrication

(30) Priorität: 06.11.2000 DE 10054896
(43) Veröffentlichungstag der Anmeldung: 22.05.2002
(73) Patentinhaber: Metallwarenfabrik Hermann Winker GmbH & Co. KG, 78549 Spaichingen (DE)
(72) Erfinder: Winker, Alexander, Dr., 78549 Spaichingen (DE)
(74) Vertreter: Winter, Martina

(56) Entgegenhaltungen:
- WO-A-00/27653
- DE-A- 19 650 453
- GB-A- 2 138 529
- US-A- 5 597 279

## Beschreibung

Die vorliegende Erfindung betrifft ein Verfahren zur Herstellung einer Mutter nach dem Oberbegriff des Anspruchs 1 sowie eine Mutter nach dem Oberbegriff des Anspruchs 5.

Aus der als nachstliegenden Stand der Technik bekannten US Patentschrift 5 597 279 sind eine gattungs-gemäße Mutter sowie ein Verfahren zur ihrer Herstellung bekannt. Dabei ist das Arretierungsmittel ein umgebördelter Rand, der nach dem Aufsetzen des Drehtellers auf die Mutter durch Massivumformen hergestellt wird.

Eine weitere Mutter ist aus der DE 33 25 255 C2 bekannt. Diese Druckschrift offenbart eine Radmutter aus Metall oder einer Metalllegierung für Nutzfahrzeuge mit einem Mutterkörper und einem als Druckteller ausgebildeten Drehteller. Der Drehteller wird auf den Mutterkörper aufgeschoben und so verankert, dass er zwar auf dem Mutterkörper leicht drehbar ist, aber nicht abgestreift werden kann. Dies wird durch Arretierungsmittel gewährleistet, die am Außenumfang des Mutterkörpers und am Innenumfang des Drehtellers vorgesehen sind und so ineinander greifen, dass der Drehteller unlösbar mit dem Mutterkörper verbunden ist. Diese Arretierungsmittel bestehen im wesentlichen aus in den Mutterkörper und den Drehteller eingearbeiteten Rücksprüngen oder Rillen.

Der Mutterkörper und der Drehteller werden in an sich bekannter Weise durch Massivumformen, wie Kalt- und/oder Warmpressen hergestellt. Die Arretierungsmittel jedoch müssen nachträglich in je einem weiteren Arbeitsgang nach dem Pressen in den Mutterkörper und den Drehteller durch spanende Bearbeitung eingebracht, bspw. eingedreht werden. Diese Art der Herstellung ist jedoch aufwendig und kostenintensiv.

Die Aufgabe der vorliegenden Erfindung besteht somit darin, eine Mutter der oben genannten Art sowie ein Verfahren zu ihrer Herstellung bereitzustellen, welche einfacher und kostengünstiger sind.

Die Lösung besteht aus einem Herstellungsverfahren mit den Merkmalen des Anspruchs 1 sowie aus einer Mutter mit den Merkmalen des Anspruchs 5.

Das erfindungsgemäße Herstellungsverfahren sieht vor, dass der Wulst in den Mutterkörper eingepresst wird. Das erfindungsgemäße Verfahren besteht also lediglich aus Pressvorgängen. Es findet keine spanende Bearbeitung statt. Da das Pressen wesentlich weniger aufwendig als eine spanende Bearbeitung ist, stellt das erfindungsgemäße Verfahren eine besonders einfache, schnelle und kostengünstige Möglichkeit zur Herstellung derartiger Muttern dar, welches besonders zur Massenfertigung geeignet ist.

Der Drehteller wird nach der Herstellung des Wulstes auf den Mutterkörper aufgeschoben. Der Drehteller wird mit einigem Kraftaufwand, in der Regel maschinell, über den Wulst geschoben oder gepresst. Dies kann dann von Vorteil sein, wenn die Oberflächen des Mutterkörpers und/oder des Drehtellers mit einer Beschichtung versehen sind, die bspw. als Korrosionsschutz dient. Wenn der Mutterkörper und der Drehteller unterschiedliche Oberflächenbeschichtungen erhalten sollen, muss die Beschichtung vor dem Aufschieben des Drehtellers auf den Mutterkörper vorgenommen werden. Dann muss der Wulst aber vor dem Beschichten in den Mutterkörper eingepresst werden, da andernfalls die Oberflächenbeschichtung beschädigt würde und bspw. der Korrosionsschutz nicht mehr gewährleistet wäre.

Vorteilhafte Weiterbildungen ergeben sich aus den Unteransprüchen. Der Mutterkörper kann einen Basiskörper und einen Halsansatz aufweisen, wobei der Drehteller auf dem Halsansatz angebracht ist. Es kann eine Konusfläche vorgesehen sein, die den Halsansatz abschließt; dies ist jedoch nicht zwingend notwendig. Es kann auch Ausführungsformen ohne Konusfläche geben. Der Wulst ist vorzugsweise am Halsansatz ausgebildet. In der Konusfläche und/oder im Halsansatz kann eine Einkerbung eingepresst sein, welche an ihrer dem Drehteller zugewandten Kante von dem Wulst begrenzt ist. Es gibt auch andere Möglichkeiten, den Wulst anzupressen, bspw. indem der Halsansatz beim Pressen des Mutterkörpers an seiner Außenseite mit einem Materialüberhang, bspw. mit einer leicht konischen Kontur, versehen wird, welcher dann zu einem Wulst gepresst wird.

Der Drehteller weist vorzugsweise entlang seiner Innenfläche einen zylindrischen Flächenbereich auf, welcher am Halsansatz des Mutterkörpers anliegt. Der Drehteller kann aber auch entlang seiner Innenfläche einen leicht konischen Flächenbereich aufweisen. Er kann ferner an dem später dem Basiskörper zugewandten Ende des zylindrischen bzw. leicht konischen Flächenbereichs eine Schräge oder Fase aufweisen. Dies ist von Vorteil, were der Drehteller nach dem Pressen des Wulstes auf den Mutterkörper aufgeschoben wird. Die leicht konische Ausgestaltung bzw. die Schräge oder Fase erleichtern hierbei das Aufschieben des Drehtellers.

Eine weitere bevorzugte Weiterbildung besteht darin, dass der verbreiterte Bund an seiner dem Halsansatz zugewandten Seite eine konusförmige Unterseite und der Drehteller entlang seiner Innenfläche einen konusförmigen Flächenbereich aufweist, welcher mit der konusförmigen Unterseite des verbreiterten Bundes in Kontakt steht. Die konusförmige Unterseite und der konusförmige Flächenbereich stellen also gegenseitige Reibflächen dar, gegen die der Drehteller drehbar ist. Der Drehteller kann im Querschnitt in etwa trapezförmig sein. Der Basiskörper kann ferner eine Kappe aufweisen.

Die erfindungsgemäße Mutter ist bspw. zur Verwendung als Radmutter für Kraftfahrzeuge geeignet.

Ein Ausführungsbeispiel der vorliegenden Erfindung wird im Folgenden anhand der beigefügten Zeichnungen näher erläutert. Es zeigen:
- Figur 1: eine schematische, nicht maßstabsgetreue Seitenansicht eines Mutterkörpers für eine erfindungsgemäße Mutter;
- Figur 2: eine schematische, nicht maßstabsgetreue, teilweise geschnittene Seitenansicht eines Drehtellers für den in Figur 1 gezeigten Mutterkörper;
- Figur 3: eine schematische, nicht maßstabsgetreue, teilweise geschnittene Seitenansicht einer erfindungsgemäßen Mutter;
- Figuren 4 und 5: eine schematische Darstellung der Verfahrensschritte zur Herstellung der in Figur 3 gezeigten Mutter gemäß einer ersten Ausführungsform des erfindungsgemäßen Verfahrens;
- Figuren 6 und 7: eine schematische Darstellung der Verfahrensschritte zur Herstellung der in Figur 3 gezeigten Mutter gemäß einer zweiten Ausführungsform des erfindungsgemäßen Verfahrens.

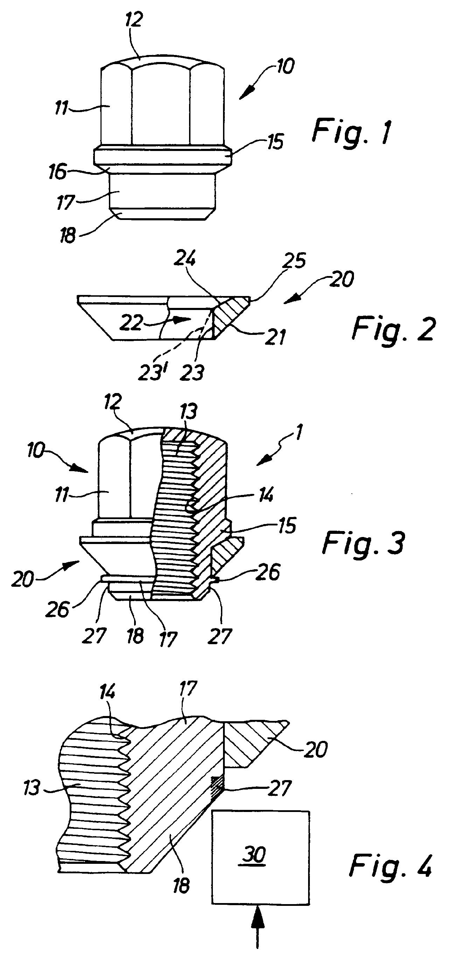

Das aus den Figuren 1 bis 3 ersichtliche Ausführungsbeispiel einer erfindungsgemäßen Sicherungsmutter 1 dient als Radmutter für Kraftfahrzeuge besteht aus einem Mutterkörper 10 und einem Drehteller 20. Der Mutterkörper 10 weist einen Basiskörper 11 auf, der im Ausführungsbeispiel auf der vom Rad abgewandten Seite mit einer Kappe 12 versehen. Der Mutterkörper 10 weist ferner eine Bohrung 13 mit einem Innengewinde 14 auf. Es ist selbstverständlich auch möglich, die Kappe 12 wegzulassen, so dass der Mutterkörper 10 eine durchgehende Bohrung 13 aufweist. Der Basiskörper 11 ist im Ausführungsbeispiel als Sechskantkörper für einen entsprechenden Radschlüssel ausgestaltet, aber die diesbezügliche Ausgestaltung des Basiskörpers 11 ist selbstverständlich beliebig wählbar.

An der dem Rad zugewandten Seite des Basiskörpers 11 weist der Mutterkörper 10 einen verbreiterten Bund 15 mit einer konischen Unterseite 16 auf, die als Kontaktfläche für die Innenfläche des Drehtellers 20 dient (siehe unten). An diese konische Unterseite 16 schließt sich ein Halsansatz 17 an. Den Abschluss des Halsansatzes 17 bildet eine Konusfläche 18.

Der Drehteller 20 ist im Querschnitt etwa trapezförmig mit einer konusförmige Außenfläche 21. Die Innenfläche 22 des Drehtellers 20 besteht aus einem zylinderförmigen Flächenbereich 23, der in Kontakt mit dem Halsansatz 17 des Mutterkörpers 10 steht und einem konusförmigen Flächenbereich 24, der in Kontakt mit der konischen Unterseite 16 des verbreiterten Bunds 15 des Mutterkörpers 10 steht. Der konusförmigen Flächenbereich 24 ist an seiner Außenkante von einem schmalen Bund 25 begrenzt.

Die gestrichelte Linie in Figur 2 deutet an, dass statt dem zylinderförmigen Flächenbereich 23 ein leicht konischer Flächenbereich 23' vorgesehen sein kann. Nicht dargestellt ist, dass am oberen Ende des zylindrischen 23 oder leicht konischen Flächenbereichs 23', im Ausführungsbeispiel also am Übergang vom zylindrischen 23 oder leicht konischen Flächenbereich 23' zum konusförmigen Flächenbereich 24, eine kleine Schräge oder Fase angebracht sein kann. Diese Ausgestaltungen erleichtern das Aufschieben des Drehtellers 20 auf den Halsansatz 17 nach dem Anbringen des Wulstes 26 (siehe dazu unten).

Der Drehteller 20 und der Mutterkörper 10 werden beide in an sich bekannter Weise durch Massivumformen wie Kalt- und/oder Warmpressen hergestellt. Sowohl die Außenfläche des Halsansatzes 17 als auch der zylinderförmige Flächenbereich 23 oder der leicht konische Flächenbereich 23' des Drehtellers 20 sind nach dem Pressvorgang völlig glatt. Zur Montage der Mutter 10 wird der Drehteller 20 auf den Halsansatz 17 des Mutterkörpers 10 aufgeschoben, bis der konusförmige Flächenbereich 24 des Drehtellers 20 an der Konusfläche 16 anliegt. Ohne zusätzliche Sicherung könnte der Drehteller 20 allerdings wieder vom Halsansatz 17 abgestreift werden. Als derartige Sicherung ist erfindungsgemäß ein zwischen Drehteller 20 und Konusfläche 18 befindlicher Wulst 26 vorgesehen, auf welchem die dem Rad zugewandte Seite des Drehtellers 20 aufsitzt, so dass er nicht vom Halsansatz 17 abgestreift werden kann.

Der Drehteller 20 wird mit einigem Kraftaufwand, in der Regel maschinell, über den Wulst 26 geschoben oder gepresst. Dabei ist die Ausgestaltung mit einem leicht konischen Flächenbereich 23' und/oder das Anbringen einer Schräge oder Fase am oberen Ende dieses Flächenbereiches von Vorteil, weil dadurch das Aufschieben des Drehtellers 20 erleichtert wird. Wenn ein leicht konischer Flächenbereich 23' vorgesehen wird, so ist dessen Innendurchmesser oben, also an dem dem Basiskörper 11 zugewandten Ende, gleich oder etwas größer als der Durchmesser des Wulstes 26. Der Innendurchmesser unten, also an dem dem Wulst 26 zugewandten Ende, ist kleiner als der Durchmesser des Wulstes 26.

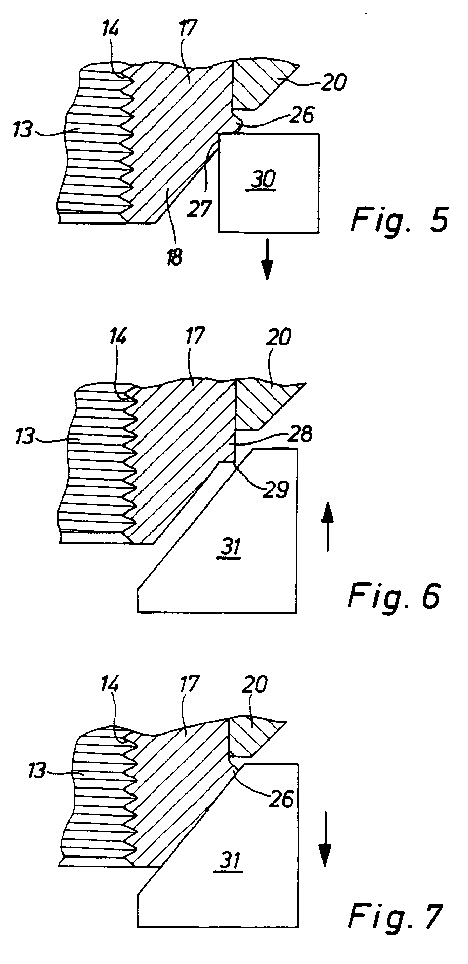

Der Wulst 26 kann beim Pressen des Mutterkörpers 10 direkt in diesen eingeformt werden. Er kann aber auch durch eine in die Konusfläche 18 und/oder in den Halsansatz 17 eingepresste Stauchung hergestellt werden, wie es in den Figuren 4 und 5 schematisch dargestellt ist. Mittels eines Werkzeugs 30, bspw. einer Matrize, wird eine im Ausführungsbeispiel etwa rechteckige Einkerbung 27 in die Konusfläche 18 und/oder den Halsansatz 17 eingepresst. Das durch den Pressvorgang aus der Einkerbung 27 heraus gepresste überschüssige Material bildet oberhalb der Einkerbung 27 eine Stauchung oder einen Wulst 26. Der Wulst 26 begrenzt also die Einkerbung 27 an ihrer dem Drehteller 20 zugewandten Kante.

Eine weitere Möglichkeit zum Einpressen des Wulstes 26 in den Halsansatz 17 ist in den Figuren 6 und 7 schematisch dargestellt. Hierbei wird beim Pressen des Mutterkörpers 10 ein Materialüberhang 28 mit eingeformt, der in seiner Außenkontur leicht konisch ist oder an seinem dem Basiskörper 11 zugewandten Ende mit einer kleinen Fase 29 oder Abschrägung versehen ist. Der Materialüberhang 28 wird vorzugsweise am Übergang von der Konusfläche 18 zum Halsansatz 17 eingeformt. Dieser Materialüberhang 28 wird mit einem geeigneten Werkzeug 31 in Richtung des Basiskörpers 11 nach oben gepresst, so dass - im Ausführungsbeispiel am Halsansatz 17 - ein Wulst 26 gebildet wird.

Das erfindungsgemäße Verfahren zur Herstellung der beschriebenen Mutter 1 besteht somit lediglich aus Pressvorgängen und ist daher einfach, kostengünstig und für die Massenherstellung derartiger Muttern, insbesondere für in großen Stückzahlen produzierte Radmuttern für Kraftfahrzeuge geeignet.

## Patentansprüche

1. Verfahren zur Herstellung einer Mutter mit einem Mutterkörper (10) mit einem verbreiterten Bund (15) und einem auf dem Mutterkörper drehbar und unverlierbar angebrachten Drehteller (20), wobei der Mutterkörper (10) und der Drehteller (20) durch Massivumformen hergestellt werden und der Drehteller (20) auf den Mutterkörper (10) aufgeschoben und mittels eines Arretierungsmittels fixiert wird, **dadurch gekennzeichnet, dass** gleichzeitig bei der Herstellung des Mutterkörpers (10) durch Pressen ein Wulst (26) einstückig aus dem Mutterkörper (10) geformt wird, und der Wulst (26) zwischen dem verbreiterten Bund (15) und dem Ende der Mutter (1) angeordnet wird, so dass der Drehteller (20) zwischen dem verbreiterten Bund (15) und dem Wulst positioniert wird.

2. Verfahren nach Anspruch 1, **dadurch gekennzeichnet, dass** in den Mutterkörper (10) eine Einkerbung (27) eingepresst wird, welche an ihrer dem Drehteller zugewandten Kante von dem Wulst (26) begrenzt wird.

3. Verfahren nach einem der vorhergehenden Ansprüche, **dadurch gekennzeichnet, dass** der Mutterkörper einen Basiskörper (11) und einen Halsansatz (17) aufweist und der Drehteller (20) auf dem Halsansatz (17) angebracht wird.

4. Verfahren nach Anspruch 3, **dadurch gekennzeichnet, dass** die Einkerbung (27) in den Halsansatz (17) und/oder in eine am freien Ende des Halsansatzes vorgesehene Konusfläche (18) eingepresst wird.

5. Mutter (1) mit einem Mutterkörper (10) mit einem verbreiterten Bund (15) und einem auf dem Mutterkörper drehbar und unverlierbar angebrachten Drehteller (20), wobei der Drehteller auf den Mutterkörper aufgeschoben und mittels eines Arretierungsmittels in Form eines einstückig aus dem Mutterkörper (10) gepressten Wulstes (26) fixiert ist, **dadurch gekennzeichnet, dass** der Wulst (26) zwischen dem verbreiterten Bund (15) und dem Ende der Mutter (1) angeordnet ist und dass der Drehteller (20) zwischen dem verbreiterten Bund (15) und dem Wulst (26) positioniert ist.

6. Mutter nach Anspruch 5, **dadurch gekennzeichnet, dass** der Wulst (26) am Übergang von der Konusfläche (18) zum Halsansatz (17) ausgebildet ist.

7. Mutter nach einem der Ansprüche 5 und 6, **dadurch gekennzeichnet, dass** der verbreiterte Bund (15) an seiner dem Halsansatz (17) zugewandten Seite eine konusförmige Unterseite (16) und der Drehteller (20) entlang seiner Innenfläche (22) einen konusförmigen Flächenbereich (24) aufweist, welcher mit der konusförmigen Unterseite (16) des verbreiterten Bundes (15) in Kontakt steht.

8. Mutter nach einem der Ansprüche 5 bis 7, **dadurch gekennzeichnet, dass** der Drehteller (20) entlang seiner Innenfläche (22) einen leicht konischen Flächenbereich (23') aufweist.

9. Mutter nach Anspruch 8, **dadurch gekennzeichnet, dass** an dem dem Basiskörper zugewandten Ende des leicht konischen Flächenbereichs (23') eine Schräge oder Fase vorgesehen ist.

10. Mutter nach einem der Ansprüche 5 bis 9, **dadurch gekennzeichnet, dass** der Drehteller (20) im Querschnitt in etwa trapezförmig ist.

11. Mutter nach einem der Ansprüche 5 bis 10, **dadurch gekennzeichnet, dass** der Basiskörper (11) eine Kappe (12) aufweist.

12. Mutter nach einem der Ansprüche 5 bis 11, nämlich eine Radmutter für Kraftfahrzeuge.

## Claims

1. Method for manufacturing a nut comprising a nut body (10), having a widened collar (15), and a rotary disc (20) fitted in a rotatable and captive manner on the nut body, the nut body (10) and the rotary disc (20) being produced by massive forming and the rotary disc (20) being pushed onto the nut body (10) and being fixed by a locking means, **characterized in that** during the manufacture of the nut body (10), a bead (26) is simultaneously shaped integrally out of the nut body (10) by pressing, and the bead (26) is disposed between the widened collar (15) and the end of the nut (1), so that the rotary disc (20) is positioned between the widened collar (15) and the bead.

2. Method according to Claim 1, **characterized in that** an indentation (27) is pressed into the nut body (10), which indentation (27), at its edge facing the rotary disc, is delimited by the bead (26).

3. Method according to one of the preceding claims, **characterized in that** the nut body has a basic element (11) and a neck extension (17) and the rotary disc (20) is fitted on the neck extension (17).

4. Method according to Claim 3, **characterized in that** the indentation (27) is pressed into the neck extension (17) and/or into a conical face (18) provided at the free end of the neck extension.

5. Nut (1) comprising a nut body (10), having a widened collar (15), and a rotary disc (20) fitted in a rotatable and captive manner on the nut body, the rotary disc being pushed onto the nut body and being fixed by a locking means in the form of a bead (26) pressed integrally out of the nut body (10), **characterized in that** the bead (26) is disposed between the widened collar (15) and the end of the nut (1) and **in that** the rotary disc (20) is positioned between the widened collar (15) and the bead (26).

6. Nut according to Claim 5, **characterized in that** the bead (26) is formed at the transition from the conical face (18) to the neck extension (17).

7. Nut according to one of Claims 5 and 6, **characterized in that** the widened collar (15), on its side facing the neck extension (17), has a conical underside (16), and the rotary disc (20), along its inner face (22), has a conical surface region (24), which is in contact with the conical underside (16) of the widened collar (15).

8. Nut according to one of Claims 5 to 7, **characterized in that** the rotary disc (20), along its inner face (22), has a slightly conical surface region (23').

9. Nut according to Claim 8, **characterized in that** a bevel or chamfer is provided at that end of the slightly conical surface region (23') which faces the basic element.

10. Nut according to one of Claims 5 to 9, **characterized in that** the rotary disc (20) is approximately trapezoidal in cross section.

11. Nut according to one of Claims 5 to 10, **characterized in that** the basic element (11) has a cap (12).

12. Nut according to one of Claims 5 to 11, namely a wheel nut for motor vehicles.

## Revendications

1. Procédé de fabrication d'un écrou avec un corps d'écrou (10) avec un épaulement élargi (15) et un plateau tournant (20) monté sur le corps d'écrou de manière à pouvoir tourner et de manière imperdable, le corps d'écrou (10) et le plateau tournant (20) étant fabriqués par formage massif et le plateau tournant (20) étant poussé sur le corps d'écrou (10) et étant fixé au moyen d'un moyen de blocage, **caractérisé en ce que** lors de la fabrication du corps d'écrou (10) par pressage, un bourrelet (26) est simultanément formé d'une seule pièce à partir du corps d'écrou (10) et le bourrelet (26) est disposé entre l'épaulement élargi (15) et l'extrémité de l'écrou (1), de sorte que le plateau tournant (20) soit positionné entre l'épaulement élargi (15) et le bourrelet.

2. Procédé selon la revendication 1, **caractérisé en ce que** l'on presse à force une entaille (27) dans le corps d'écrou (10), laquelle est limitée au niveau de son arête tournée vers le plateau tournant par le bourrelet (26).

3. Procédé selon l'une quelconque des revendications précédentes, **caractérisé en ce que** le corps d'écrou présente un corps de base (11) et une partie de col (17) et le plateau tournant (20) est monté sur la partie de col (17).

4. Procédé selon la revendication 3, **caractérisé en ce que** l'entaille (27) est pressée à force dans la partie de col (17) et/ou dans une surface conique (18) prévue à l'extrémité libre de la partie de col.

5. Ecrou (1) avec un corps d'écrou (10) ayant un épaulement élargi (15) et un plateau tournant (20) monté sur le corps d'écrou de manière à pouvoir tourner et de manière imperdable, le plateau tournant étant poussé sur le corps d'écrou et étant fixé au moyen d'un moyen de blocage en forme de bourrelet (26) pressé d'une seule pièce sur le corps d'écrou (10), **caractérisé en ce que** le bourrelet (26) est disposé entre l'épaulement élargi (15) et l'extrémité de l'écrou (1) et **en ce que** le plateau tournant (20) est positionné entre l'épaulement élargi (15) et le bourrelet (26).

6. Ecrou selon la revendication 5, **caractérisé en ce que** le bourrelet (26) est réalisé au niveau de la transition de la surface conique (18) à la partie de col (17).

7. Ecrou selon l'une quelconque des revendications 5 et 6, **caractérisé en ce que** l'épaulement élargi (15) présente, sur son côté tourné vers la partie de col (17), un côté inférieur de forme conique (16) et le plateau tournant (20) présente, le long de sa surface intérieure (22), une région de surface de forme conique (24), qui est en contact avec le côté inférieur de forme conique (16) de l'épaulement élargi (15).

8. Ecrou selon l'une quelconque des revendications 5 à 7, **caractérisé en ce que** le plateau tournant (20) présente le long de sa surface intérieure (22) une région de surface légèrement conique (23').

9. Ecrou selon la revendication 8, **caractérisé en ce qu'**un biseau ou un chanfrein est prévu sur l'extrémité de la région de surface légèrement conique (23') tournée vers le corps de base.

10. Ecrou selon l'une quelconque des revendications 5 à 9, **caractérisé en ce que** le plateau tournant (20) a une section transversale de forme approximativement trapézoïdale.

11. Ecrou selon l'une quelconque des revendications 5 à 10, **caractérisé en ce que** le corps de base (11) présente un capuchon (12).

12. Ecrou selon l'une quelconque des revendications 5 à 11, à savoir écrou de roue d'un véhicule automobile.
